# EUROPEAN PATENT APPLICATION

(11) **EP 3 176 863 A1**
(43) Date of publication of application: **07.06.2017**
(21) Application number: 15827778.0
(22) Date of filing: 22.07.2015
(51) Int. Cl.: H01M 8/24, H01M 8/18, H01M 8/20, H01M 8/02

(54) **STACK FUSION APPARATUS FOR REDOX FLOW BATTERY**

(30) Priority: 29.07.2014 KR 20140096507
(71) Applicant: Lotte Chemical Corporation, Dongjak-gu Seoul 07071 (KR)
(72) Inventor: JUNG, Hyun-Jin, Daejeon 305-720 (KR); KIM, Dae-Sik, Daejeon 302-802 (KR); KWAK, Eun-Sik, Daejeon 305-751 (KR); CHOI, Won-Seok, Daejeon 305-758 (KR); JANG, Hyun-Seok, Daejeon 305-720 (KR); KIM, Dong-Whe, Daejeon 305-720 (KR); HA, Dal-Yong, Daejeon 305-720 (KR)
(74) Representative: Delorme, Nicolas
(86) International application number: PCT/KR2015/007640
(87) International publication number: WO 2016/017989

(57) **Abstract**

Disclosed is a stack welding apparatus for a redox flow battery. The stack welding apparatus for forming a stack by vibration-welding unit cells including an electrode flow frame and a membrane flow frame of a zinc-bromine flow battery including: i) a lower die supporting at least one unit cell and installed to be movable in a vertical direction; ii) an upper die disposed above the lower die and pressurizing the at least one unit cell as the lower die is lifted; and iii) a vibration source applying vibrations to the upper die to vibration-weld the at least one unit cell, wherein a plurality of divided plates are installed and fixed to bases of the lower die and the upper die corresponding to each other, and a thickness adjustment thin plate for adjusting a thickness deviation of the at least one unit cell is installed between at least one divided plate and one of the bases.

## Description

### CROSS-REFERENCE TO RELATED APPLICATIONS

This application claims the benefit of Korean Patent Application No. 10-2014-0096507 on July 29, 2014 with the Korean Intellectual Property Office, the disclosure of which is herein incorporated by reference in its entirety.

### BACKGROUND OF THE INVENTION

### (a) Field of the Invention

An exemplary embodiment of the present invention relates to a system for manufacturing a stack for a redox flow battery, and more particularly, to a stack welding apparatus for a zinc-bromine flow battery with alignment of unit cells.

### (b) Description of the Related Art

Recently, in order to suppress greenhouse gas emissions, a major cause of global warming, renewable energy such as solar photovoltaic energy or wind energy has come to prominence, and a great amount of research has been conducted to commercialize and supply renewable energy.

However, renewable energy is greatly affected by a location environment or natural conditions. In addition, renewable energy severely fluctuates in output, making it impossible to continuously and uniformly supply energy.

Thus, in order to use renewable energy for a household purpose or a commercial purpose, a system of storing energy when output is high and using the stored energy when output is low has been introduced and used.

As such an energy storage system, a large capacity rechargeable battery is used. For example, a large capacity rechargeable battery storage system has been introduced to a large scale photovoltaic power generation and wind generation complex. The rechargeable battery for storing large capacity electric power includes a lead storage battery, a NaS battery, a redox flow battery (RFB), and the like.

The lead storage battery is commercially widely used, relative to other batteries, but it has shortcomings such as low efficiency, maintenance cost incurred due to periodical replacement, a problem of industrial waste disposal, and the like. The NaS battery has high energy efficiency but it disadvantageously operates at high temperatures of 300 □ or higher.

The RFB is low in maintenance cost, is operable at room temperature, and can be designed independently in capacity and output, and as such, the RFB has recently been actively researched as a large capacity rechargeable battery.

The RFB, in which a stack is formed by disposing a membrane, an electrode, and a bipolar plate in series, similar to that of a fuel cell battery, has a function of a rechargeable battery allowing charging and discharging of electrical energy.

In the RFB, ions are exchanged as a positive electrode electrolyte and a negative electrode electrolyte respectively supplied from positive and negative electrode electrolyte storage tanks circulate on both sides of the membrane, and in this process, electrons move to perform charging and discharging.

Since the RFB has a long lifespan and is able to be manufactured as a medium and large system of a kilowatt to megawatt class, compared with existing rechargeable batteries, the RFB is known to be most appropriate for an energy storage system (ESS).

The RFB may be, for example, a zinc-bromine flow battery, in which an electrode flow frame and a membrane flow frame are configured as a unit cell, and a stack may be formed by stacking a plurality of such unit cells.

Here, a spacer is positioned between the electrode flow frame and the membrane flow frame, allowing an electrolyte to flow therein. A total of four inlets allowing the electrolyte to flow therethrough are provided, and the electrolyte may flow downwardly or upwardly along flow channels.

The unit cells of the electrode flow frame and the membrane flow frame may be welded to each other according to a vibration-welding scheme to form a stack, and to this end, the electrode flow frame and the membrane flow frame have fusing areas formed on an outer side of a reaction area.

For example, as vibration welding facilities forming a stack of a flow battery using the vibration-welding scheme, an upper jig, a lower jig installed to be lifted or lowered with respect to the upper jig, and a vibration source applying vibration to these jigs are provided.

Thus, in the vibration welding facilities for a flow battery, a unit cell is loaded to the lower jig, and as the lower jig is lifted, the unit cell is pressed by the upper jig, and when vibrations generated by the vibration source are provided to the upper jig, the fusing areas of the electrode flow frame and the membrane flow frame are fused to be welded, thus vibration-welding the unit cell.

Also, another unit cell may be stacked on the vibration-welded unit cell and vibration-welded in the same manner, thus manufacturing a stack in which a plurality of unit cells are vibration-welded.

With the vibration-welding scheme of the flow battery, it is important to evenly arrange the unit cells to increase internal pressure and make flowability of a fluid uniform to reduce a possibility of leakage, because this is directly related to charging/discharging efficiency of the battery.

However, in the related art, research into a stack alignment technique and a unit cell fixing technique of the vibration welding facilities used in manufacturing the zinc-bromine flow battery has not been sufficiently done.

Matters described in the background art section are provided to promote understanding of the background of the present invention, which may include matters that are not a prior art known to those skilled in the art to which the present invention pertains.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a stack welding apparatus for a redox flow battery having advantages of reducing thickness variations of unit cells and enhancing fixing and alignment of the unit cells.

An exemplary embodiment of the present invention provides a stack welding apparatus for forming a stack by vibration-welding unit cells including an electrode flow frame and a membrane flow frame of a zinc-bromine flow battery, including: i) a lower die supporting at least one unit cell and installed to be movable in a vertical direction; ii) an upper die disposed above the lower die and pressurizing the at least one unit cell as the lower die is lifted; and iii) a vibration source applying vibrations to the upper die to vibration-weld the at least one unit cell, wherein a plurality of divided plates are installed and fixed to bases of the lower die and the upper die corresponding to each other, and a thickness adjustment thin plate for adjusting a thickness deviation of the at least one unit cell is installed between at least one divided plate and one of the bases.

The thickness adjustment thin plate may be formed of an aluminum thin plate.

A plurality of unit cells may be stacked on the divided plates of the lower die
Fixing pins may be installed in at least any one of the lower die and the upper die such that the fixing pins are able to reciprocate in a vertical direction in order to fix the unit cells to divided plates at corners thereof.

The fixing pins may be installed in divided plates at corners of the lower die such that the fixing pins are able to reciprocate in a vertical direction by operating cylinders, and penetrate through the unit cells.

Guide members for aligning the unit cells may be installed on the base of the lower die to correspond to the corner portions of the unit cells.

The guide members may be installed on the base to correspond to a middle position between the corners of the unit cells and align the unit cells.

The guide members may be formed as blocks, and a plurality of guide members may be stacked in an upward direction according to a height of the unit cells and fastened to each other.

A knurled part for fixing the unit cells is formed on surfaces of the divided plates.

According to exemplary embodiments of the present invention, since the fixing and alignment of the unit cells are enhanced, internal pressure of the unit cells is increased, flowability of a fluid becomes uniform, reducing a possibility of leakage, whereby overall charging/discharging efficiency of the stack is enhanced in terms of current efficiency, voltage efficiency, and energy efficiency.

### BRIEF DESCRIPTION OF THE DRAWINGS

The drawings are to be referred to in describing exemplary embodiments of the present invention, so a technical concept of the present invention should not be construed as being limited to the accompanying drawings.
FIG. 1 is a view schematically illustrating a stack welding apparatus for a redox flow battery according to an exemplary embodiment of the present invention.
FIG. 2 is a perspective view illustrating a structure of divided plates of an upper die and a lower die applied to the stack welding apparatus for a redox flow battery according to an exemplary embodiment of the present invention.
FIG. 3 is a perspective view illustrating a portion of a fixing pin applied to the stack welding apparatus for a redox flow battery according to an exemplary embodiment of the present invention.
FIG. 4 is a perspective view illustrating a guide member applied to the stack welding apparatus for a redox flow battery according to an exemplary embodiment of the present invention.
FIG. 5 is a graph illustrating an operational effect of the stack welding apparatus for a redox flow battery according to an exemplary embodiment of the present invention.

### DETAILED DESCRIPTION OF THE EMBODIMENTS

Hereinafter, the present invention will be described more fully with reference to the accompanying drawings, in which exemplary embodiments of the invention are shown. As those skilled in the art would realize, the described embodiments may be modified in various different ways, all without departing from the spirit or scope of the present invention.

The drawings and description are to be regarded as illustrative in nature and not restrictive, and like reference numerals designate like elements throughout the specification.

In the drawings, sizes and thickness of components are arbitrarily shown for description purposes, so the present invention is not limited to the illustrations of the drawings, and thicknesses are exaggerated to clearly express various parts and regions.

In the following descriptions, terms such as "first", "second", etc., may be used only to distinguish one component from another as pertinent components are named the same, and an order thereof is not limited.

Throughout the specification, unless explicitly described to the contrary, the word "comprise" and variations such as "comprises" or "comprising" will be understood to imply the inclusion of stated elements but not the exclusion of any other elements.

The terms "unit", "means", "part", "member", and the like, described in the specification, refer to units of comprehensive configurations performing at least one function or operation.

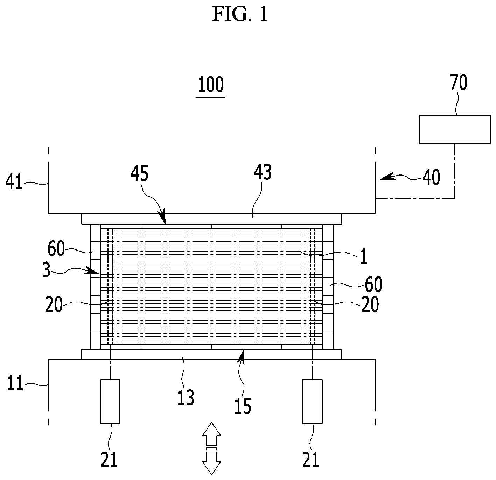

FIG. 1 is a view schematically illustrating a stack welding apparatus for a redox flow battery according to an exemplary embodiment of the present invention.

Referring to FIG. 1, a stack welding apparatus 100 for a redox flow battery according to an exemplary embodiment of the present invention may be applied to a system for manufacturing a stack 3 for a zinc-bromine flow battery by vibration-welding unit cells 1 as a flow battery.

For example, a redox flow battery may include a zinc-bromine flow battery according to a positive electrode electrolyte and a negative electrode electrolyte, and the zinc-bromine flow battery may include a unit cell 1 including an electrode flow frame and a membrane flow frame, and a plurality of unit cells 1 may be continuously arranged to form a stack 3 as an electricity generation assembly.

Here, the unit cells 1 of the electrode flow frame and the membrane flow fame are mutually welded through the vibration welding scheme so as to be stacked to form the stack, and to this end, the electrode flow frame and the membrane flow frame form fusing areas on an outer side of a reaction area.

The zinc-bromine flow battery includes components of a redox flow battery of a technique widely known in the art, and thus detailed descriptions of the components will be omitted in this disclosure.

In an exemplary embodiment of the present invention, an example in which the stack welding apparatus for a redox flow battery fuses and welds fusing areas of the electrode flow membrane and the membrane flow frame by applying vibrations to the unit cells 1 will be described.

However, the scope of the present invention is not limited thereto, and the technical concept of the present invention may be applied to vibration welding facilities of various types and purposes as long as the welding facilities welds predetermined base plates by vibration.

The stack welding apparatus 100 according to an exemplary embodiment of the present invention has a structure capable of increasing internal pressure of the unit cells 1, making flowability of a fluid uniform, and reducing a possibility of leakage by enhancing fixing and alignment of the unit cells 1 according to vibration welding.

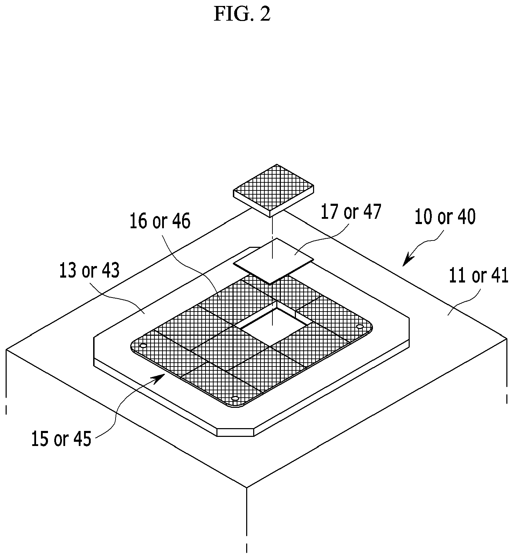

To this end, the stack welding apparatus 100 according to an exemplary embodiment of the present invention includes a lower die 10 (see FIG. 2), an upper die 40, and a vibration source 70.

In an exemplary embodiment of the present invention, the lower die 10, supporting at least one unit cell 1, is fixedly installed on a frame 11. The frame 11 of the lower die 10 may be configured to be lifted in a vertical direction with respect to the upper die 40 (to be described hereinafter) through a sliding driving device (not shown).

The upper die 40, pressurizing the unit cell 1 on the lower end, is fixedly disposed on a frame 41 above the lower die 10. As the lower die 10 is lifted, the upper die 40 may pressurize the unit cell 1 on the lower die 10.

Here, the frames 11 and 41 include various components such as a bracket, a bar, a rod, a plate, a rail, a housing, a partition, a case, a block, and a collar, to support the lower die 10 and the upper die 40.

However, since the components are used to install the lower die 10 and the upper die 40 and peripheral equipment and the like, the components will be generally called the frames 11 and 41, except for an exceptional case, in an exemplary embodiment of the present invention.

In a state in which the lower die 10 is lifted and the unit cell 1 on the lower die 10 is pressurized by the upper die 40, the vibration source 70 applies vibrations to the upper die 40. The vibration source 70 is configured as a vibration device having a general structure, and thus a detailed description thereof will be omitted.

Thus, in the stack welding apparatus 100 according to an exemplary embodiment of the present invention, when vibrations are provided to the upper die 40 through the vibration source 70 in a state in which the unit cell 1 is loaded on the lower die 10, the lower die 10 is lifted, and the unit cell 1 on the lower die 10 is pressurized by the upper die 40, the fusing areas of the electrode flow frame and the membrane flow frame are fused to be welded to each other, thus vibration-welding the unit cell 1.

Also, the stack welding apparatus 100 may stack another unit cell 1 on the vibration-welded unit cell 1 and vibration-weld the unit cell 1, thus manufacturing a stack in which a plurality of unit cells are vibration-welded.

Meanwhile, in an exemplary embodiment of the present invention, plate-shaped bases 13 and 43 are installed on surfaces of the lower die 10 and the upper die 40 corresponding to each other, and a plurality of divided plates 15 and 45 are installed on the bases 13 and 43, respectively.

The divided plates 15 and 45, supporting the unit cells 1 on a plane, may be fixedly coupled to the bases 13 and 43 of the lower die 10 and the upper die 40 through a fastening member (not shown) such as a bolt or the like.

Here, knurled parts 16 and 46 (see FIG. 2) are formed on surfaces of the divided plates 15 and 45 supporting the unit cell 1 in order to prevent the unit cell 1 pressurized between the lower die 10 and the upper die 40 from moving when the lower die 10 is lifted and the unit cell 1 is pressurized by the upper die 40. The knurled parts 16 and 46 may be formed on surfaces of the divided plates 15 and 45 through a general knurling process.

Also, in an exemplary embodiment of the present invention, as illustrated in FIGS. 1 and 2, thickness adjustment thin plates 17 and 47 may be installed between one or a plurality of divided plates 15 and 45 and the bases 13 and 43 in order to adjust thickness variations of the unit cells 1.

The thickness adjustment thin plates 17 and 47 may be interposed between the divided plates 15 and 45 and the bases 13 and 43 in order to adjust vertical and horizontal thickness variations of the unit cells 1.

The thickness adjustment thin plates 17 and 47 may be formed as aluminum thin plates, for example. The thickness adjustment thin plates 17 and 47 may be interposed between the divided plates 15 and 45 and the bases 13 and 43 and may be fixed through the aforementioned fastening member.

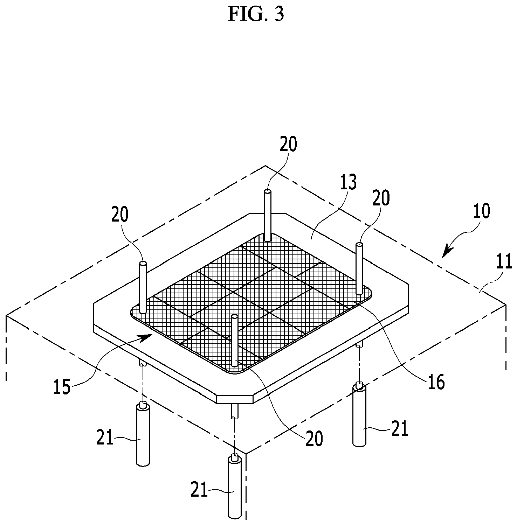

Referring to FIGS. 1 and 3, the stack welding apparatus 100 according to an exemplary embodiment of the present invention further includes fixing pins 20 for fixing the unit cells 1 when the unit cells 1 are pressurized by the upper die 40 as the lower die 10 is lifted.

The fixing pins 20 may be provided in any either of the lower die 10 and the upper die 40. For example, the fixing pins 20 may be installed in the divided plates 15 corresponding to corners of the base 13 of the lower die 10.

The fixing pins 20 may be installed to reciprocate in a vertical direction from the corners of the base 13, and the fixing pins 20 may be installed to reciprocate in a vertical direction by operating cylinders 21 fixedly installed on the lower die 10.

The operating cylinders 21 may operate by hydraulic pressure or pneumatic pressure and move the fixing pins 20 upward and downward in a vertical direction.

Here, the fixing pins 20 may fix the unit cells while moving in an upward direction by the operating cylinders 21 according to a height of the unit cells 1 stacked on the lower die 10, and the fixing pins 20 may penetrate through the unit cells 1 to fix them.

Alternatively, although not shown, in an exemplary embodiment of the present invention, fixing pins 20 may also be installed on the divided plates 45 corresponding to the corners of the base 43 of the upper die 40 together with the fixing pins 20 of the lower die 10.

This is to fix the unit cells 1 while moving the fixing pins 20 of the upper die 40 in a downward direction by a difference in height, if the unit cells 1 are stacked to have a higher height than a set upward movement length of the fixing pins 20 of the lower die 10.

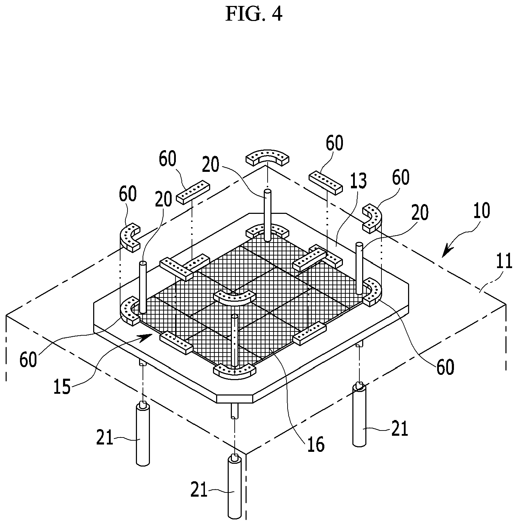

Also, referring to FIGS. 1 and 4, the stack welding apparatus 100 according to an exemplary embodiment of the present invention further includes guide members 60 installed on the lower die 10 and aligning the arrangement of the stacked unit cells 1.

The guide members 60 serve to evenly align the unit cells 1 when the unit cells 1 are stacked on the lower die 10 and the lower die 10 is lifted to allow the unit cells 1 to be pressurized through the upper die 40.

The guide members 60 may be installed on the base 13 of the lower die 10 to correspond to the corner portions of the unit cells 1. That is, the guide members 60 may be installed at the corner portions of the base 10.

The guide members 60 are formed as blocks, and a plurality of guide members 60 may be stacked up in an upward direction according to a stacking height of the unit cells 1 and fastened to each other.

That is, the guide members 60 may be sequentially disposed from an upper surface of the base 13 according to a height of the stacked unit cells 1, and may be fastened to each other by a fastening member such as a bolt.

Further, the guide members 60 according to an exemplary embodiment of the present invention may also be installed on the base 13 to correspond to a middle portion between the corners of the unit cells 1 as illustrated in the drawing, as well as being installed at the corner portions of the base 13.

Hereinafter, an operation of the stack welding apparatus 100 for a redox flow battery according to an exemplary embodiment of the present invention configured as described above will be described in detail with reference to the accompanying drawings.

First, in an exemplary embodiment of the present invention, the unit cell 1 is loaded to the lower die 10, and the lower die 10 is lifted to allow the unit cell 1 to be pressurized through the upper die 40.

In this state, when vibrations are applied to the upper die 40 through the vibration source 70, the fusing areas of the electrode flow frame and the membrane flow frame of the unit cell are fused to be welded to each other, thus vibration-welding the unit cell 1 in an exemplary embodiment of the present invention.

Also, in an exemplary embodiment of the present invention, another unit cell 1 may be stacked on the vibration-welded unit cell 1 and vibration-welded in the same manner as that described above, whereby a stack in which a plurality of unit cells 1 are vibration-welded may be manufactured.

Here, in an exemplary embodiment of the present invention, since portions of the lower die 10 and the upper die 40 supporting the unit cells 1 are formed of the divided plates 15 and 45, and the knurled parts 16 and 46 are formed on the surfaces of the divided plates 15 and 45, the unit cells 1 pressurized by the upper die 40 by lifting the lower die 10 are prevented from moving.

Also, in an exemplary embodiment of the present invention, since the thickness adjustment thin plates 17 and 47 are interposed between the divided plates 15 and 45 and the bases 13 and 43, respectively, vertical and horizontal thickness variations of the unit cells 1 may be adjusted through the thickness adjustment thin plates 17 and 47.

During this process, in an exemplary embodiment of the present invention, when the unit cells 1 on the lower die 10 are pressurized through the upper die 40 by lifting the lower die 10, the unit cells 1 may be fixed by moving the fixing pins 40 through the operating cylinders 21.

Here, the fixing pins 20 may be moved forwardly by the operating cylinders 21 according to a height of the stacked unit cells 1, and penetrate through the unit cells 1 to fix the unit cells 1.

Further, in an exemplary embodiment of the present invention, the arrangement of the stacked unit cells 1 may be evenly aligned through the guide members 60, and the guide members 60 may be stacked and fastened in an upward direction according to a height of the stacked unit cells 1 to align the unit cells 1.

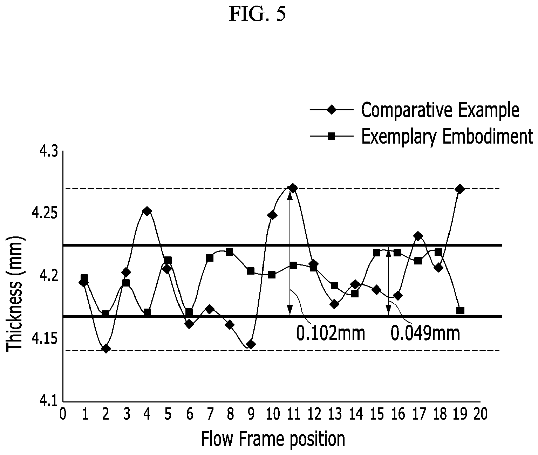

In this manner, in an exemplary embodiment of the present invention described above, thickness variations of the unit cells 1 according to stacking may be reduced. Here, when compared with comparative example not employing a unit cell alignment structure, in an exemplary embodiment of the present invention, as illustrated in the graph of FIG. 5, with respect to two flow frames of a unit cell, a thickness variation of the present embodiment is 0.049 mm, while a thickness variation of the comparative example is 0.102 mm.

Through this, it can be seen that the thickness variations of the unit cells 1 are reduced by 50 % or greater, compared with those the comparative example, by enhancing fixing and alignment of the unit cells 1 through the divided plate structure, the thickness adjustment thin plate structure, the fixing pin structure, and the guide member structure.

Also, in an exemplary embodiment of the present invention, since the fixing and alignment of the unit cells 1 are enhanced, internal pressure of the unit cells 1 is increased, and flowability of a fluid becomes uniform, reducing a possibility of leakage.

Thus, when charging/discharging efficiency of the exemplary embodiment of the present invention and that of the comparative example as described above are evaluated, it can be seen that overall charging/discharging efficiency of the stack of the exemplary embodiment of the present invention (refer to Table 1) was increased in terms of current efficiency, voltage efficiency, and energy efficiency, compared with the comparative example (refer to Table 2).

**(Table 1)**

| Classification | Current efficiency | Voltage efficiency | Energy efficiency |
|---|---|---|---|
| 1 cycle | 88.68 | 82.94 | 73.55 |
| 2 cycles | 88.54 | 83.12 | 73.59 |
| 3 cycles | 88.89 | 82.90 | 73.69 |

**(Table 2)**

| Classification | Current efficiency | Voltage efficiency | Energy efficiency |
|---|---|---|---|
| 1 cycle | 83.15 | 84.49 | 70.26 |
| 2 cycles | 83.71 | 83.91 | 70.24 |
| 3 cycles | 82.99 | 84.35 | 70.00 |

Hereinabove, exemplary embodiments of the present disclosure have been described in detail with reference to the accompanying drawings. However, the ideas of the present disclosure are not limited thereto, and those skilled in the art who understand the ideas of the present invention may easily propose any other embodiments within the scope of the present invention through addition, change, deletion, and the like, and those embodiments will also be within the scope of the present invention.

### <Description of symbols>

- 1...: unit cell
- 3...: stack
- 10...: lower die
- 11, 41...: frame
- 13, 43...: base
- 15, 45...: divided plate
- 16, 46...: knurled part
- 17, 47...: thickness adjustment thin plate
- 20...: fixing pin
- 21...: operating cylinder
- 40...: upper die
- 60...: guide member
- 70...: vibration source

## Claims

1. A stack welding apparatus for forming a stack by vibration-welding unit cells including an electrode flow frame and a membrane flow frame of a zinc-bromine flow battery, the stack welding apparatus comprising:
a lower die supporting at least one unit cell and installed to be movable in a vertical direction;
an upper die disposed above the lower die and pressurizing the at least one unit cell as the lower die is lifted; and
a vibration source applying vibrations to the upper die to vibration-weld the at least one unit cell,
wherein a plurality of divided plates are installed and fixed to bases of the lower die and the upper die corresponding to each other, and
a thickness adjustment thin plate for adjusting a thickness deviation of the at least one unit cell is installed between at least one divided plate and one of the bases.

2. The stack welding apparatus of claim 1, wherein
the thickness adjustment thin plate is formed of an aluminum thin plate.

3. The stack welding apparatus of claim 1, wherein
a plurality of unit cells are stacked on the divided plates of the lower die, and
fixing pins are installed in at least any one of the lower die and the upper die such that the fixing pins are able to reciprocate in a vertical direction in order to fix the unit cells to divided plates at corners thereof.

4. The stack welding apparatus of claim 3, wherein
the fixing pins are installed in divided plates at corners of the lower die such that the fixing pins are able to reciprocate in a vertical direction by operating cylinders, and penetrate through the unit cells.

5. The stack welding apparatus of claim 3, wherein
guide members for aligning the unit cells are installed on the base of the lower die to correspond to the corner portions of the unit cells.

6. The stack welding apparatus of claim 5, wherein
the guide members are installed on the base to correspond to a middle position between the corners of the unit cells and align the unit cells.

7. The stack welding apparatus of claim 5, wherein
the guide members are formed as blocks, and a plurality of guide members are stacked in an upward direction according to a height of the unit cells and fastened to each other.

8. The stack welding apparatus of claim 1, wherein
a knurled part for fixing the unit cells is formed on surfaces of the divided plates.
